(19)

Europäisches
Patentamt
European
Patent Office
Office européen
des brevets

(11) **EP 4 645 977 A1**

(12) **EUROPEAN PATENT APPLICATION**
published in accordance with Art. 153(4) EPC

(43) Date of publication:
**05.11.2025 Bulletin 2025/45**

(21) Application number: 23910231.2

(22) Date of filing: 18.12.2023

(51) International Patent Classification (IPC):
**H04W 68/02** (2009.01)    **H04W 52/02** (2009.01)

(52) Cooperative Patent Classification (CPC):
**H04L 27/26; H04W 4/20; H04W 52/02;
H04W 68/02; H04W 72/231**

(86) International application number:
**PCT/CN2023/139437**

(87) International publication number:
**WO 2024/140301 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.12.2022  CN 202211698127

(71) Applicant: SHANGHAI LANGBO
COMMUNICATION TECHNOLOGY
COMPANY LIMITED
Shanghai 200240 (CN)

(72) Inventors:
• JIANG, Qi
  Shanghai 201206 (CN)
• LIU, Zheng
  Shanghai 201206 (CN)
• ZHANG, Xiaobo
  Shanghai 201206 (CN)

(74) Representative: Gunzelmann, Rainer
Wuesthoff & Wuesthoff
Patentanwälte und Rechtsanwalt PartG mbB
Schweigerstraße 2
81541 München (DE)

(54) **METHOD AND APPARATUS USED IN NODE FOR WIRELESS COMMUNICATION**

(57)    Disclosed in the present application are a method and apparatus used in a node for wireless communications. A node first receives a target information block and a target wake-up signal, the target wake-up signal being used for determining a first device group, and the first node being one device comprised in the first device group; and then the node determines whether to monitor a target paging early indicator, the target paging early indicator being associated with G1 device groups. The target information block is used for determining the G1 device groups, and any one of the G1 device groups comprises at least one device. A second device group is one of the G1 device groups, the first node belongs to the second device group, and the relationship between the first device group and the second device group is used for determining whether to monitor the target paging early indicator. According to the present application, the means of receiving a weak-up signal and a paging early indicator in a terminal-side energy saving scenario is improved so as to improve the overall performance of the system.

FIG. 1

AA    First node
BB    Step 101: Receive a target information block and a target wake-up signal, the target wake-up signal being used for determining a first device group, the first device group at least comprising one device, and the first node being one device comprised in the first device group
CC    Step 102: Determine whether to monitor a target paging early indicator, the target paging early indicator being associated with G1 device groups, and G1 being a positive integer greater than 1
DD    End

EP 4 645 977 A1

## Description

### Technical Field

The present application relates to a transmission method and apparatus in a wireless communication system, and in particular to a low-power transmission solution and apparatus in wireless communication.

### Background Art

The application scenarios of future wireless communication systems are becoming increasingly diversified, and different application scenarios impose different performance requirements on the system. In order to meet the different performance requirements of various application scenarios, it was decided at the 72nd plenary meeting of the 3GPP (3rd Generation Partner Project) RAN (Radio Access Network) to carry out study on the new radio (NR) technology (or 5G). At the 75th plenary meeting of the 3GPP RAN, the WI (Work Item) of the new radio (NR) technology was approved, and the standardization work on NR was initiated.

In the new radio technology, power consumption is an important indicator to measure technical performance. In order to adapt to diversified application scenarios and meet different needs, 3GPP has been continuously evolving technologies for reducing power consumption.

### Summary of the Invention

Among various technologies for reducing power consumption, waking up the receiver of user equipment (UE) or a network device (gNB/eNB) in advance via a wake-up signal is regarded as an effective method. However, in the discussion of Release-17, PEI (Paging Early Indication) has been introduced into the system to indicate whether the terminal device needs to monitor the paging-related PDCCH (Physical Downlink Control Channel) in the next PO (Paging Occasion), and thus PEI itself has certain attributes of a wake-up signal. Therefore, how PEI can coexist with the low power wake-up signals currently discussed is a problem that needs to be solved. To address the need for PEI and low-power wake-up signals in NR systems, the present application discloses a solution. It should be noted that in the description of the present application, reducing power consumption is only used as a typical application scenario or example. The wake-up signals in the present application are also applicable to other scenarios facing similar problems (such as other scenarios that require pre-wake-up, including, but not limited to, capacity enhancement systems, systems for short-range communications, unlicensed frequency domain communications, IoT (Internet of Things), URLLC (Ultra Reliable Low Latency Communication) network, and Internet of Vehicles), and may also achieve similar technical effects. In addition, using a unified solution for different scenarios (including, but not limited to, multi-carrier scenarios) can also help to reduce hardware complexity and cost. In the case of no conflict, embodiments and features in the embodiments of a first node device of the present application may be applied to a second node device, and vice versa.

In particular, the interpretation of the terminologies, nouns, functions, and variables in the present application (if not specifically noted) can refer to the definitions in the specification protocols TS36 series, TS38 series, and TS37 series of 3GPP. If necessary, 3GPP standards TS38.211, TS38.212, TS38.213, TS38.214, TS38.215, TS38.321, TS38.331, TS38.305, TS38.304, and TS37.355 can be referred to for assisting in understanding the present application.

The present application discloses a method used in a first node for wireless communication, comprising:

> receiving a target information block and receiving a target wake-up signal, the target wake-up signal being used for determining a first device group, the first device group comprising at least one device, and the first node being one device comprised in the first device group; and
> determining whether to monitor a target paging early indication, the target paging early indication being associated with G1 device groups, and G1 being a positive integer greater than 1,
> wherein the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the above method is characterized in that: determining whether it is necessary to monitor a PEI through the relationship between the first device group and the second device group, and then avoiding the energy consumption caused by frequent activation of the terminal radio frequency through the configuration of the low power wake-up signal and PEI.

According to one aspect of the present application, when the first device group and the second device group are the same or the first device group is a subset of the second device group, the first node is not required to monitor the target paging early indication; otherwise, the first node monitors the target paging early indication.

As one embodiment, the above method is characterized in that: when the grouping of LP (Low Power) WUSs (Wake-Up Signals) and the grouping of PEIs adopt the same way, the LP WUSs can replace the function of the PEIs, and then the terminal does not need to monitor the PEIs after receiving the LP WUSs, but is directly waken up to start receiving paging-related PDCCHs; otherwise, after receiving the LP WUSs, the terminal still needs to monitor the PEIs to determine whether it is necessary to further receive the paging-related PDCCHs.

According to one aspect of the present application, the above method comprises:

determining whether to monitor a first signaling in a first paging occasion,

wherein the G1 device groups are all associated with the first paging occasion, and the target wake-up signal is associated with the first paging occasion; the target wake-up signal and the target paging early indication are used together for determining whether to monitor the first signaling in the first paging occasion; and an identifier of the first node is used for determining the first paging occasion.

As one embodiment, the above method is characterized in that: when the groupings of the LP (Low Power) WUSs (Wake-Up Signals) and the PEIs adopts different ways, the terminal needs to receive the LP WUSs and the PEIs simultaneously to determine that it is waken up and starts to receive the paging-related PDCCHs.

As one embodiment, the above method is characterized in that: the PEIs are added on the basis of the LP WUSs, thereby avoiding false detection of the LP WUSs and further reducing the energy consumption of the terminal.

According to one aspect of the present application, the above method comprises:

receiving a first information block,

wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

According to one aspect of the present application, the above method comprises:

sending target information,

wherein the target information is used for determining that the first node supports the target wake-up signal and the target paging early indication simultaneously.

According to one aspect of the present application, the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; an identifier of the second device group is used for determining the target configuration set from the X2 configuration sets, and the target configuration set is used for determining time domain resources occupied by the target paging early indication.

According to one aspect of the present application, the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

The present application discloses a method used in a second node for wireless communication, comprising:

sending a target information block and sending a target wake-up signal, the target wake-up signal being used for determining a first device group, the first device group comprising at least one device, and a first node being one device comprised in the first device group; and

sending a target paging early indication, the target paging early indication being associated with G1 device groups, and G1 being a positive integer greater than 1,

wherein a recipient of the target information block comprises the first node; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

According to one aspect of the present application, when the first device group and the second device group are the same or the first device group is a subset of the second device group, the first node is not required to monitor the target paging early indication; otherwise, the first node monitors the target paging early indication.

According to one aspect of the present application, the above method comprises:

determining whether to send a first signaling in a first paging occasion,
wherein the G1 device groups are all associated with the first paging occasion, and the target wake-up signal is associated with the first paging occasion; the target wake-up signal and the target paging early indication are used together for determining whether to send the first signaling in the first paging occasion; and an identifier of the first node is used for determining the first paging occasion.

According to one aspect of the present application, the above method comprises:

sending a first information block,
wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

According to one aspect of the present application, the above method comprises:

receiving target information,
wherein the target information is used for determining that the first node supports the target wake-up signal and the target paging early indication simultaneously.

According to one aspect of the present application, the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; an identifier of the second device group is used for determining the target configuration set from the X2 configuration sets, and the target configuration set is used for determining time domain resources occupied by the target paging early indication.

According to one aspect of the present application, the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

The present application discloses a first node for wireless communication, comprising:

a first transceiver, receiving a target information block and receiving a target wake-up signal, the target wake-up signal being used for determining a first device group, the first device group comprising at least one device, and the first node being one device comprised in the first device group; and
a first receiver, determining whether to monitor a target paging early indication, the target paging early indication being associated with G1 device groups, and G1 being a positive integer greater than 1,
wherein the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

The present application discloses a second node for wireless communication, comprising:

a second transceiver, sending a target information block and sending a target wake-up signal, the target wake-up signal being used for determining a first device group, the first device group comprising at least one device, and a first node being one device comprised in the first device group; and
a first transmitter, sending a target paging early indication, the target paging early indication being associated with G1 device groups, and G1 being a positive integer greater than 1,
wherein a recipient of the target information block comprises the first node; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the solution in the present application has the following benefit: the configuration and transmission way of the data channel in the network energy saving scenario is optimized, so as to improve the spectrum efficiency and avoid resource waste.

**Brief Description of the Drawings**

Other features, purposes and advantages of the present application will become more apparent from reading the detailed description of the non-limiting embodiments made with reference to the following drawings:

FIG. 1 shows a processing flowchart of a first node according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of a target information block according to one embodiment of the present application;
FIG. 6 shows a flowchart of a first signaling according to one embodiment of the present application;
FIG. 7 shows a flowchart of a first information block according to one embodiment of the present application;
FIG. 8 shows a flowchart of target information according to one embodiment of the present application;
FIG. 9 shows a schematic diagram of a target wake-up signal and a target paging early indication according to one embodiment of the present application;
FIG. 10 shows a structural block diagram of a processing unit in a first node device according to one embodiment of the present application; and
FIG. 11 shows a structural block diagram of a processing unit in a second node device according to one embodiment of the present application.

**Detailed Description of Embodiments**

The technical solution of the present application will be further described in detail below in conjunction with the drawings. It should be noted that, in the case of no conflict, embodiments and the features in the embodiments of the present application can be arbitrarily combined with each other.

**Embodiment 1**

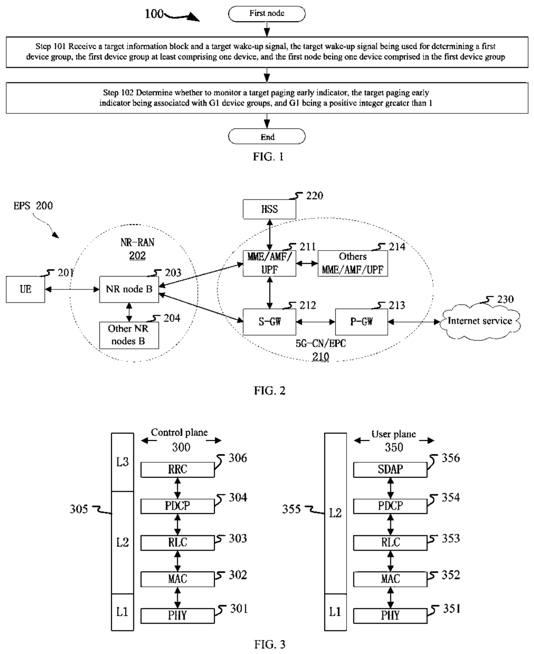

Embodiment 1 illustrates one processing flowchart of a first node, as shown in FIG. 1. In 100 shown in FIG. 1, each box represents one step. In Embodiment 1, in step 101, the first node in the present application receives a target information block and receives a target wake-up signal, the target wake-up signal being used for determining a first device group, the first device group comprising at least one device, and the first node being one device comprised in the first device group. In step 102, the first node determines whether to monitor a target paging early indication, the target paging early indication being associated with G1 device groups, and G1 being a positive integer greater than 1.

In Embodiment 1, the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the step 102 comprises determining to monitor the target paging early indication.

As one embodiment, the step 102 comprises determining to abandon monitoring the target paging early indication.

As one embodiment, the target information block is transmitted via an air interface or a wireless interface.

As one embodiment, the target information block comprises all or part of one high-layer signaling or one physical layer signaling.

As one embodiment, the target information block comprises all or part of one RRC (Radio Resource Control) layer signaling, or the target information block comprises all or part of one MAC (Medium Access Control) layer signaling.

As one embodiment, the target information block comprises all or part of one system information block (SIB).

As one embodiment, the target information block comprises all or part of an SIB1.

As one embodiment, the target information block is user equipment-specific (UE-specific), or the target information block is cell-specific.

As one embodiment, the target information block is configured per carrier, the target information block is configured per BWP (Bandwidth Part), or the target information block is configured per band or per frequency range (FR).

As one embodiment, the target information block comprises all or part of fields in a DCI (Downlink Control Information) format.

As one embodiment, the target information block comprises all or part of fields in a DownlinkConfigCommonSIB IE.

As one embodiment, the target information block comprises all or part of fields in a PEI-Config IE.

As one embodiment, the target information block comprises all or part of fields in a PDCCH-ConfigCommon IE.

As one embodiment, the target information block comprises all or part of fields in a PEI-ConfigBWP IE.

As one embodiment, the name of the RRC signaling carrying the target information block comprises PEI.

As one embodiment, the name of the RRC signaling carrying the target information block comprises Config.

As one embodiment, the name of the RRC signaling carrying the target information block comprises Paging.

As one embodiment, the name of the RRC signaling carrying the target information block comprises Common.

As one embodiment, the target information block comprises all or part of the PEI (Paging Early Indication) configuration information.

As one embodiment, the target wake-up signal is a low power wake-up signal (LP-WUS).

As one embodiment, the target wake-up signal is a square-wave signal.

As one embodiment, the target wake-up signal is a frequency modulated signal.

As one embodiment, the target wake-up signal is a signal using OOK (On/Off Keying).

As one embodiment, the target wake-up signal is a signal using FSK (Frequency Shift Keying).

As one embodiment, the target wake-up signal is a signal using OOK and a constant envelope sequence.

As one embodiment, the target wake-up signal is a signal using FSK and a constant envelope sequence.

As one embodiment, the target wake-up signal is a signal for waking up a baseband processing function of a receiver.

As one embodiment, the target wake-up signal is a signal for waking up the complete baseband processing function of a receiver.

As one embodiment, the target wake-up signal is a signal used for waking up the monitoring or reception of the PDCCH (Physical Downlink Control Channel).

As one embodiment, the target wake-up signal is a baseband signal or a radio-frequency signal.

As one embodiment, the target wake-up signal is generated through OFDM.

As one embodiment, the target wake-up signal is used to reduce power consumption.

As one embodiment, the target wake-up signal is used in an RRC (Radio Resource Control) idle state or an RRC inactive state.

As one embodiment, the target wake-up signal can be used in an RRC (Radio Resource Control) idle state, an RRC inactive state and an RRC connected state.

As one embodiment, one bit block and one feature sequence are used for generating the target wake-up signal via OOK.

As one embodiment, one bit block and one feature sequence are used for generating the target wake-up signal via FSK.

As one embodiment, one bit block is subjected to at least one or more of OOK modulation, transform precoding, mapping to physical resources, OFDM baseband signal generation, and modulation and upconversion to generate the target wake-up signal.

As one embodiment, one bit block is subjected to at least one or more of FSK modulation, transform precoding, mapping to physical resources, OFDM baseband signal generation, and modulation and upconversion to generate the target wake-up signal.

As one embodiment, one bit block is subjected to at least one or more of OOK modulation, sequence generation/modulation, transform precoding, mapping to physical resources, OFDM baseband signal generation, and modulation and upconversion to generate the target wake-up signal.

As one embodiment, one bit block is subjected to at least one or more of FSK modulation, sequence generation/modulation, transform precoding, mapping to physical resources, OFDM baseband signal generation, and modulation and upconversion to generate the target wake-up signal.

As one embodiment, one bit block is subjected to at least one or more of oversampling or spreading/extension or repetition, transform precoding, mapping to physical resources, OFDM baseband signal generation, and modulation and upconversion to generate the target wake-up signal.

As one embodiment, one bit block is subjected to at least one or more of oversampling or spreading/extension or repetition, sequence generation/modulation, transform precoding, mapping to physical resources, OFDM baseband signal generation, and modulation and upconversion to generate the target wake-up signal.

As one embodiment, the reception of the target wake-up signal is implemented at the radio frequency.

As one embodiment, the reception of the target wake-up signal is implemented at the intermediate frequency.

As one embodiment, the reception of the target wake-up signal is implemented at the baseband.

As one embodiment, the reception of the target wake-up signal is implemented by envelop detection.

As one embodiment, the reception of the target wake-up signal is implemented by correlation.

As one embodiment, the reception of the target wake-up signal is implemented by energy detection.

As one embodiment, the reception of the target wake-up signal is implemented by envelope detection and decoding.

As one embodiment, the reception of the target wake-up signal is implemented by envelope detection and correlation.

As one embodiment, the reception of the target wake-up signal is implemented by frequency modulation (FM) to amplitude modulation (AM) conversion and envelope detection.

As one embodiment, the receiving way of the target wake-up signal is implementation-related.

As one embodiment, the receiver used for the reception of the target wake-up signal is implementation-related.

As one embodiment, the reception of the target wake-up signal is related to the capability of the first node device.

As one embodiment, the first device group comprises only monitors of the target wake-up signal.

As one embodiment, the first device group also comprises a piece of user equipment other than the monitors of the target wake-up signal.

As one embodiment, the first device group is configurable, or the first device group is predefined.

As one embodiment, the user equipment comprised in the first device group is assigned by the core network.

As one embodiment, the user equipment comprised in the first device group is determined according to the capabilities of the user equipment.

As one embodiment, the first device group is one subset (or subgroup) of a user equipment set (or user equipment group) corresponding to the same PO.

As one embodiment, the first device group is one subset (or subgroup) of a user equipment set (or user equipment group) monitoring the same PO.

As one embodiment, the first device group is one subset (or subgroup) of a user equipment set (or user equipment group) corresponding to the first paging occasion.

As one embodiment, the first device group is one subset (or subgroup) of a user equipment set (or user equipment group) that can monitor the first signaling in the first paging occasion.

As one embodiment, the user equipment comprised in the first device group is determined according to the type of the wake-up signal receiver of the user equipment.

As one embodiment, the user equipment comprised in the first device group is determined according to the type of the user equipment.

As one embodiment, all pieces of user equipment comprised in the first device group have the same or similar wake-up signal receiving capability.

As one embodiment, all pieces of user equipment comprised in the first device group use the same or similar wake-up signal receiver.

As one embodiment, all pieces of user equipment comprised in the first device group do not support the core network to assign the subgroups.

As one embodiment, the user equipment comprised in the first device group is determined according to an identifier of the user equipment.

As one embodiment, the identifiers of all pieces of user equipment comprised in the first device group have the same modulo value of one configured or predefined parameter.

As one embodiment, the 5G-S-TMSI of all pieces of user equipment comprised in the first device group satisfies the following formula:

$$GroupID = (floor(5G\text{-}S\text{-}TMSI/(N*Ns)) \bmod GroupNum,$$

wherein GroupID represents the identifier of the first device group, N represents the number of paging frames in the DRX cycle, Ns represents the number of paging occasions corresponding to one paging frame, and GroupNum represents the number of configured or predefined device groups.

As one embodiment, the 5G-S-TMSI of all pieces of user equipment comprised in the first device group satisfies the following formula:

$$GroupID = (floor(5G\text{-}S\text{-}TMSI/(N*Ns)) \bmod GroupNum + Offset,$$

wherein GroupID represents the identifier of the first device group, N represents the number of paging frames in the DRX cycle, Ns represents the number of paging occasions corresponding to one paging frame, GroupNum represents the number of configured or predefined device groups, and Offset represents a configurable or predefined offset value.

As one embodiment, the identifier of the first device group is a non-negative integer.

As one embodiment, the identifier of the first device group is assigned by the core network.

As one embodiment, the identifier of the first device group is equal to the equal identifier values respectively assigned to all pieces of user equipment comprised in the first device group.

As one embodiment, each piece of user equipment comprised in the first device group is assigned one equal identifier value, and the first device group identifier is equal to the equal identifier value assigned to any user equipment comprised in the first device group.

As one embodiment, the identifier of the first device group is obtained according to the identifier of the user equipment comprised in the first device group.

As one embodiment, the identifier of the first device group is signaling-configured or pre-defined.

As one embodiment, the identifier of the first device group is equal to one equal value obtained by the same mathematical operation of the identifiers of all comprised user equipment.

As one embodiment, the identifier of the first device group is an index of the first device group in a plurality of device groups.

As one embodiment, the target paging early indication comprises a PEI.

As one embodiment, the target paging early indication comprises a PDCCH.

As one embodiment, the target paging early indication comprises a PDCCH used for a paging early indication.

As one embodiment, the target paging early indication comprises all or part of fields in one DCI format.

As one embodiment, the target paging early indication comprises a PDCCH of PEI-RNTI (Paging Early Indication Radio Network Temporary Identity) scrambled with CRC (Cyclic Redundancy Check).

As one embodiment, the target paging early indication comprises a PDCCH of PS-RNTI (Power Saving Radio Network Temporary Identity) scrambled with CRC.

As one embodiment, the target paging early indication comprises all or part of fields in the DCI format 2_6.

As one embodiment, the target paging early indication comprises all or part of fields in the DCI format 2_7.

As one embodiment, the target paging early indication is carried via a PDSCH (Physical Downlink Shared Channel).

As one embodiment, the target paging early indication carries high-layer information.

As one embodiment, the target paging early indication carries physical layer information.

As one embodiment, the target paging early indication carries core network information.

As one embodiment, the second device group comprises only a monitor of the target paging early indication.

As one embodiment, the second device group also comprises user equipment other than the monitor of the target paging early indication.

As one embodiment, the second device group is configurable, or the second device group is predefined.

As one embodiment, the user equipment comprised in the second device group is assigned by the core network.

As one embodiment, the user equipment comprised in the second device group is determined according to the capabilities of the user equipment.

As one embodiment, the second device group is one subset (or subgroup) of a user equipment set (or user equipment group) corresponding to the same PO.

As one embodiment, the second device group is one subset (or subgroup) of a user equipment set (or user equipment group) monitoring the same PO.

As one embodiment, the second device group is one subset (or subgroup) of a user equipment set (or user equipment group) corresponding to the first paging occasion.

As one embodiment, the second device group is one subset (or subgroup) of a user equipment set (or user equipment group) that can monitor the first signaling in the first paging occasion.

As one embodiment, all pieces of user equipment comprised in the second device group do not support the core network to assign the subgroups.

As one embodiment, the user equipment comprised in the second device group is determined according to the identifier of the user equipment.

As one embodiment, the identifiers of all pieces of user equipment comprised in the second device group have the same modulo value of one configured or predefined parameter.

As one embodiment, all pieces of user equipment comprised in the second device group satisfy the following formula:

SubgroupID = (floor(UE_ID/(N*Ns)) mod subgroupsNumForUEID) + (subgroupsNumPerPO - subgroupsNumFor-UEID),

wherein SubgroupID represents the corresponding subgroup identifier of the second device group; N represents the number of PFs (Paging Frames) in one DRX cycle in one RRC_IDLE state; Ns represents the number of POs (Paging Occasions) in one PF; UE_ID corresponds to the value of the 5G-S-TMSI modulo X of the user equipment, and when eDRX is adopted, X is equal to 32768, otherwise X is equal to 8192; and subgroupsNumForUEID represents the number of subgroups based on UE_ID subgroups in one PO, which is broadcast through system messages.

As one embodiment, the identifier of the second device group is a non-negative integer.

As one embodiment, the identifier of the second device group is assigned by the core network.

As one embodiment, the identifier of the second device group is equal to the equal identifier values respectively assigned to all pieces of user equipment comprised in the second device group.

As one embodiment, each piece of user equipment comprised in the second device group is assigned one equal identifier value, and the second device group identifier is equal to the equal identifier value assigned to any user equipment comprised in the second device group.

As one embodiment, the identifier of the second device group is obtained according to the identifier of the user equipment comprised in the second device group.

As one embodiment, the identifier of the second device group is signaling-configured or pre-defined.

As one embodiment, the identifier of the second device group is equal to one equal value obtained by the same mathematical operation of the identifiers of all comprised user equipment.

As one embodiment, the identifier of the second device group is an index of the second device group in a plurality of device groups.

As one embodiment, the technical feature "the relationship between the first device group and the second device group is used for determining whether to monitor the target paging early indication" comprises: whether the first device group and the second device group are the same is used for determining whether to monitor the target paging early indication.

As one embodiment, the technical feature "the relationship between the first device group and the second device group is used for determining whether to monitor the target paging early indication" comprises: whether the second device group comprises the first device group is used for determining whether to monitor the target paging early indication.

As one embodiment, the technical feature "the relationship between the first device group and the second device group is used for determining whether to monitor the target paging early indication" comprises: whether any device in the first device group belongs to the second device group is used for determining whether to monitor the target paging early indication.

As one embodiment, the technical feature "the relationship between the first device group and the second device group is used for determining whether to monitor the target paging early indication" comprises: the relationship between the first device group and the second device group is used for determining whether the first node is required to monitor the target paging early indication.

### Embodiment 2

Embodiment 2 illustrates a schematic diagram of a network architecture, as shown in FIG. 2.

FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise a piece of UE (User Equipment) 201, an NR-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, however, those skilled in the art will readily appreciate that the various concepts presented throughout the present application may be extended to networks providing circuit switching services or other cellular networks. The NR-RAN comprises an NR Node B (gNB) 203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of UE201 include cellular phones, smart phones, session initiation protocol (SIP) phones, laptops, personal digital assistants (PDAs), satellite radios, non-terrestrial base station communications, satellite mobile communications, global positioning systems, a multimedia apparatus, a video apparatus, a digital audio player (e.g., an MP3 player), a camera, a game console, a drone, an aircraft, a narrowband physical network device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MMEs/AMFs/UPFs 214, an S-GW (Service Gateway) 212, and a P-GW (Packet Date Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted through the S-GW212, and the S-GW212 is itself connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application.

As one embodiment, the UE201 supports terminal-side Energy Saving.

As one embodiment, the UE201 supports the reception of a LP WUS.

As one embodiment, the UE201 supports the reception of a PEI.

As one embodiment, the NR node B corresponds to the second node in the present application.

As one embodiment, the NR node B supports terminal-side Energy Saving.

As one embodiment, the NR node B supports the sending of a LP WUS.

As one embodiment, the NR node B supports the sending of a PEI.

As one embodiment, the NR node B is one base station.

As one embodiment, the NR node B is one cell.

As one embodiment, the NR node B comprises a plurality of cells.

As one embodiment, the first node in the present application corresponds to the UE201, and the second node in the present application corresponds to the NR node B.

## Embodiment 3

Embodiment 3 shows a schematic diagram of an embodiment of one radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, a gNB or an RSU in V2X) and a second communication node device (a gNB, UE or an RSU in V2X) using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301 and is responsible for the link between the first communication node device and the second communication node device through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and the PDCP sublayer 304 also provides inter-cell mobility support of the first communication node device to the second communication node device. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sub-layer 356, and the SDAP sub-layer 356 is responsible for mapping between a QoS flow and a data radio bearer (DRB) to support the diversity of services. Although not shown in the figure, the first communication node device may have several upper layers above the L2 layer 355, including a network layer (e.g., an IP layer) terminating at the P-GW on the network side and an application layer terminating at the other end of the connection (e.g., remote UE and a server).

As one embodiment, the radio protocol architecture in FIG. 3 is applicable to the first node in the present application.

As one embodiment, the radio protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the target information block is generated at the RRC306.

As one embodiment, the target information block is generated at the MAC302 or MAC352.

As one embodiment, the target wake-up signal is generated at the MAC302 or MAC352.

As one embodiment, the target wake-up signal is generated at the PHY301 or PHY351.

As one embodiment, the target paging early indication is generated at the MAC302 or MAC352.

As one embodiment, the target paging early indication is generated at the PHY301 or PHY351.

As one embodiment, the first signaling is generated at the RRC306.

As one embodiment, the first signaling is generated at the MAC302 or MAC352.

As one embodiment, the first signaling is generated at the PHY301 or PHY351.

As one embodiment, the first information block is generated at the RRC306.

As one embodiment, the first information block is generated at the MAC302 or MAC352.

As one embodiment, the target information is generated at the RRC306.

As one embodiment, the target information is generated at the MAC302 or MAC352.

As one embodiment, the target information is generated at the PHY301 or PHY351.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

## Embodiment 4

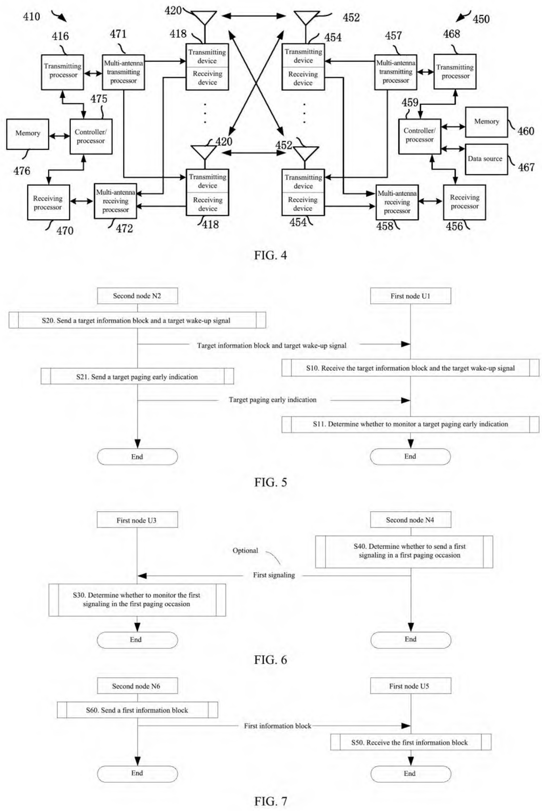

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first node device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding on the coded and modulated signals, including codebook-based precoding and non-codebook-based precoding, and beamforming processing to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operation. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 can be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels, and implements the functions of the L2 layer for the user plane and the control plane. The controller/processor 459 is also responsible for retransmission of lost packets and signalings to the second communication device 410. The transmitting processor 468 performs modulation mapping and channel coding processing, and the multi-antenna transmitting processor 457 performs digital multi-antenna spatial precoding, including codebook-based precoding and non-codebook-based precoding, and beamforming processing. Then, the transmitting processor 468 modulates the produced spatial stream into a multi-carrier/single-carrier symbol stream, which is provided to a different antenna 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the functions at the second communication device 410 are similar to the receiving function at the first communication device 450 described in the transmission from the second communication device 410 to the first communication device 450. Each receiving device 418 receives a radio-frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, the first communication device 450 apparatus comprises: at least one processor and at least one memory, wherein the at least one memory comprises a computer program code; the at least one memory and the computer program code are configured to be used together with the at least one processor, the first communication device 450 apparatus at least: first receives a target information block and receives a target wake-up signal, the target wake-up signal being used for determining a first device group, the first device group comprising at least one device, and the first node being one device comprised in the first device group; and then determines whether to monitor a target paging early indication, the target paging early indication being associated with G1 device groups, and G1 being a positive integer greater than 1; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the first communication device 450 comprises: a memory storing a computer-readable instruction program, wherein the computer-readable instruction program generates actions when executed by at least one processor, the actions comprising: first receiving a target information block and receiving a target wake-up signal, the target wake-up signal being used for determining a first device group, the first device group comprising at least one device, and the first node being one device comprised in the first device group; and then determining whether to monitor a target paging early indication, the target paging early indication being associated with G1 device groups, and G1 being a positive integer greater than 1; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the second communication device 410 apparatus comprises: at least one processor and at least one memory, wherein the at least one memory comprises a computer program code; and the at least one memory and the computer program code are configured to be used together with the at least one processor. The second communication device 410 apparatus at least: first sends a target information block and sends a target wake-up signal, the target wake-up signal being used for determining a first device group, the first device group comprising at least one device, and a first node being one device comprised in the first device group; and then sends a target paging early indication, the target paging early indication being associated with G1 device groups, and G1 being a positive integer greater than 1; a recipient of the target information block comprises the first node; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the second communication device 410 apparatus comprises: a memory storing a computer-readable instruction program, wherein the computer-readable instruction program generates actions when executed by at least one processor, the actions comprising: first sending a target information block and sending a target wake-up signal, the target wake-up signal being used for determining a first device group, the first device group comprising at least one device, and a first node being one device comprised in the first device group; and then sending a target paging early indication, the target paging early indication being associated with G1 device groups, and G1 being a positive integer greater than 1; a recipient of the target information block comprises the first node; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the first communication device 450 corresponds to a first node in the present application.

As one embodiment, the second communication device 410 corresponds to a second node in the present application.

As one embodiment, the first communication device 450 is a piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one serving cell.

As one embodiment, the second communication device 410 is one TRP.

As one embodiment, at least the first four of the antenna 452, the receiving device 454, the multi-antenna receiving processor 458, the receiving processor 456, and the controller/processor 459 are used for receiving a target information block and receiving a target wake-up signal; and at least the first four of the antenna 420, the transmitting device 418, the multi-antenna transmitting processor 471, the transmitting processor 416, and the controller/processor 475 are used for sending a target information block and receiving a target wake-up signal.

As one embodiment, at least the first four of the antenna 452, the receiving device 454, the multi-antenna receiving processor 458, the receiving processor 456, and the controller/processor 459 are used for determining whether to monitor a target paging early indication; and at least the first four of the antenna 420, the transmitting device 418, the multi-antenna transmitting processor 471, the transmitting processor 416, and the controller/processor 475 are used for sending a target paging early indication.

As one embodiment, at least the first four of the antenna 452, the receiving device 454, the multi-antenna receiving processor 458, the receiving processor 456, and the controller/processor 459 are used for monitoring a first signaling in a first paging occasion; and at least the first four of the antenna 420, the transmitting device 418, the multi-antenna transmitting processor 471, the transmitting processor 416, and the controller/processor 475 are used for sending a first signaling in a first paging occasion.

As one embodiment, at least the first four of the antenna 452, the receiving device 454, the multi-antenna receiving processor 458, the receiving processor 456, and the controller/processor 459 are used for receiving a first information block; and at least the first four of the antenna 420, the transmitting device 418, the multi-antenna transmitting processor 471, the transmitting processor 416, and the controller/processor 475 are used for sending a first information block.

As one embodiment, at least the first four of the antenna 452, the transmitting device 454, the multi-antenna transmitting processor 457, the transmitting processor 468, and the controller/processor 459 are used for sending target information; and at least the first four of the antenna 420, the receiving device 418, the multi-antenna receiving processor 472, the receiving processor 470, and the controller/processor 475 are used for receiving target information.

## Embodiment 5

Embodiment 5 illustrates a flowchart of a target information block, as shown in FIG. 5. In FIG. 5, a first node U1 communicates with a second node N2 via a radio link. It should be particularly noted that the order in this embodiment does not limit the signal transmission order and implementation order in the present application. In the case of no conflict, embodiments, sub-embodiments and subsidiary embodiments in Embodiment 5 can be applied to Embodiment 6, 7, or 8; conversely, in the case of no conflict, any embodiment, sub-embodiment and subsidiary embodiment in Embodiment 6, 7, or 8 can be applied to Embodiment 5.

For **the first node U1,** in step S10, a target information block and a target wake-up signal are received; and in step S11, whether to monitor a target paging early indication is determined.

For **the second node N2,** in step S20, a target information block and a target wake-up signal are sent; and in step S21, a target paging early indication is sent.

In Embodiment 5, the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the step S11 comprises determining to monitor the target paging early indication.

As one embodiment, the step S11 comprises receiving a target paging early indication.

As one embodiment, the step S21 comprises determining whether to send the target paging early indication.

Typically, when the first device group and the second device group are the same or the first device group is a subset of the second device group, the first node is not required to monitor the target paging early indication; otherwise, the first node monitors the target paging early indication.

As one embodiment, the meaning of the above feature "the first device group and the second device group are the same" comprises: the first device group and the second device group comprise the same number of UE.

As one embodiment, the meaning of the above feature "the first device group and the second device group are the same" comprises: any piece of UE comprised in the first device group is a piece of UE in the second device group, and any piece of UE comprised in the second device group is a piece of UE in the first device group.

As one embodiment, the meaning of the above feature "the first device group and the second device group are the same" comprises: there is no piece of UE that belongs to only one of the first device group or the second device group.

As one embodiment, the meaning of the above feature "the first device group is a subset of the second device group" comprises: the number of UE comprised in the first device group is less than the number of UE comprised in the second device group.

As one embodiment, the meaning of the above feature "the first device group is a subset of the second device group" comprises: any UE comprised in the first device group is a piece of UE in the second device group, and the second device group comprises at least one piece of UE that does not belong to the first device group.

As one embodiment, the meaning of the above feature "the first device group is a subset of the second device group" comprises: there is a piece of UE that belongs to only the second device group in the first device group or the second device group.

Typically, the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; and an identifier of the second device group is used for determining the target configuration set from the X2 configuration sets, and the target configuration set is used for determining time domain resources occupied by the target paging early indication.

As one embodiment, any one of the X2 configuration sets is a value (or state) of one IE (information element).

As one embodiment, any one of the X2 cell sets is a combination of values of a plurality of fields.

As one embodiment, any one of the X2 configuration sets is a combination of values of at least one field.

As one embodiment, any one of the X2 configuration sets is a value (or state) of one wake-up signal configuration IE.

As one embodiment, any one of the X2 configuration sets is composed of values of all fields comprised in one IE.

As one embodiment, any one of the configuration parameter values comprised in any one of the X2 configuration sets is a value of one field.

As one embodiment, the X2 configuration sets constitute one wake-up signal configuration list.

As one embodiment, any one of the X2 configuration sets comprises elements comprised in one list.

As one embodiment, any two of the X2 configuration sets are two configurations of the same IE.

As one embodiment, any two of the X2 configuration sets are respectively composed of values of fields from two separate configurations of the same IE.

As one embodiment, any two of the X2 configuration sets are separate values (or states) of two identical IEs.

As one embodiment, any two of the X2 configuration sets are separate configurations of two identical IEs.

As one embodiment, any two of the X2 configuration sets are respectively composed of values of fields from separate configurations of two identical IEs.

As one embodiment, any two of the X2 configuration sets respectively comprise values of fields from two configurations of the same IE.

As one embodiment, any two of the X2 configuration sets respectively comprise values of fields from two configurations of the same IE.

As one embodiment, any two of the X2 configuration sets are respectively composed of the values from two separate configurations of combinations of the same fields.

As one embodiment, configuration parameter values respectively comprised in any two of the X2 configuration sets are independently configured.

As one embodiment, any one of the X2 configuration sets is composed of values of fields comprised in one wake-up signal configuration comprised in a wake-up signal configuration list.

As one embodiment, there exist two of the X2 configuration sets that are respectively values (or states) of two different IEs.

As one embodiment, there exist two of the X2 configuration sets that are respectively separate configurations of two different IEs.

As one embodiment, there exist two of the X2 configuration sets that respectively comprise separate values of different fields.

As one embodiment, at least one of the X2 configuration sets comprises values of fields used for configuring frequency domain resources of a PEI.

As one embodiment, at least one of the X2 configuration sets comprises values of fields used for configuring time domain resources of a PEI.

As one embodiment, at least one of the X2 configuration sets comprises values of fields used for configuring sequence resources used by the PEI.

As one embodiment, at least one of the X2 configuration sets comprises values of fields used for configuring the number of information bits carried by a PEI.

As one embodiment, at least one of the X2 configuration sets comprises values of fields used for configuring a format used by a PEI.

As one embodiment, at least one of the X2 configuration sets comprises values of fields used for configuring a method for generating a PEI.

As one embodiment, at least one of the X2 configuration sets comprises values of fields used for configuring a type of a PEI.

As one embodiment, at least one of the X2 configuration sets comprises the number of POs in one PEI.

As one embodiment, at least one of the X2 configuration sets comprises a Payload Size of DCI 2_7.

As one embodiment, at least one of the X2 configuration sets comprises pei-FrameOffset.

As one embodiment, at least one of the X2 configuration sets comprises a subgroup configuration.

As one embodiment, at least one of the X2 configuration sets comprises a PEI search space set configuration.

As one embodiment, at least one of the X2 configuration sets comprises the number of subgroups in one PO.

As one embodiment, at least one of the X2 configuration sets comprises the number of subgroups in one PO.

As one embodiment, at least one of the X2 configuration sets comprises the number of subgroups corresponding to one UE_ID.

**Embodiment 6**

Embodiment 6 illustrates a flowchart of a first signaling, as shown in FIG. 6. In FIG. 6, a first node U3 communicates with a second node N4 via a radio link. It should be particularly noted that the order in this embodiment does not limit the signal transmission order and implementation order in the present application. In the case of no conflict, embodiments, sub-embodiments and subsidiary embodiments in Embodiment 6 can be applied to Embodiment 5, 7 or 8; conversely, in the case of no conflict, any embodiment, sub-embodiment and subsidiary embodiment in Embodiment 5, 7 or 8 can be applied to Embodiment 6.

For a **first node U3,** in step S30, whether to monitor a first signaling in a first paging occasion is determined.

For a **second node N4,** in step S40, whether to send a first signaling in a first paging occasion is determined.

In Embodiment 6, the G1 device groups are all associated with the first paging occasion, and the target wake-up signal is associated with the first paging occasion; the target wake-up signal and the target paging early indication are used together for determining whether to monitor the first signaling in the first paging occasion; and an identifier of the first node is used for determining the first paging occasion.

As one embodiment, in FIG. 6, whether the first signaling is sent is optional.

As one embodiment, the step S30 comprises determining to monitor the first signaling in the first paging occasion.

As one embodiment, the step S30 comprises receiving the first signaling in the first paging occasion.

As one embodiment, the step S40 comprises determining to send the first signaling in the first paging occasion.

As one embodiment, the step S40 comprises sending the first signaling in the first paging occasion.

As one embodiment, the first paging occasion corresponds to one PO.

As one embodiment, the first paging occasion corresponds to a plurality of POs.

As one embodiment, the meaning of the phrase "the G1 device groups are all associated with the first paging occasion" comprises: the paging occasion corresponding to the UE comprised in any of the G1 device groups comprises the first paging occasion.

As one embodiment, the meaning of the phrase "the G1 device groups are all associated with the first paging occasion" comprises: when the UE comprised in any of the G1 device groups receives the target paging early indication, and the target paging early indication indicates the subgroup to which the UE belongs, the UE monitors the PDCCH in the first paging occasion.

As one embodiment, the meaning of the above phrase "the target wake-up signal is associated with the first paging occasion" comprises: the target wake-up signal is used for indicating the first paging occasion.

As one embodiment, the meaning of the above phrase "the target wake-up signal is associated with the first paging occasion" comprises: the target wake-up signal is used for determining the first paging occasion.

As one embodiment, the meaning of the above phrase "the target wake-up signal is associated with the first paging occasion" comprises: the target wake-up signal is used for indicating the first node, and the paging occasion corresponding to the first node comprises the first paging occasion.

As one embodiment, the target paging early indication is used for determining the first paging occasion.

As one embodiment, when both the target wake-up signal and the target paging early indication are used for determining the first node, the first node monitors the first signaling in the first paging occasion.

As one embodiment, when both the target wake-up signal and the target paging early indication are used for waking up the first node, the first node monitors the first signaling in the first paging occasion.

As one embodiment, when the target wake-up signal is used for waking up the first node, and the bit corresponding to the first node in the target paging early is equal to "1", the first node monitors the first signaling in the first paging occasion.

As one embodiment, when the target wake-up signal is used for waking up the first node, and the first device group and the second device group are the same or the first device group is a subset of the second device group, the first node monitors the first signaling in the first paging occasion.

As one embodiment, when the target wake-up signal is used for waking up the first node, and the first device group and the second device group are different or the first device group is not a subset of the second device group, the target paging early indication is used for indicating whether the first node monitors the first signaling in the first paging occasion.

As one embodiment, the UE_ID of the first node is used for determining the bit corresponding to the first node in the target paging early indication.

As one embodiment, the UE_ID of the first node is used for determining the bit corresponding to the second device group in the target paging early indication.

As one embodiment, the ID of the second device group is used for determining the bit corresponding to the first node in the target paging early indication.

As one embodiment, the UE_ID of the first node is used for determining the ID of the second device group.

As one embodiment, the UE_ID of the first node is used for determining the Subgroup ID corresponding to the first node.

As one embodiment, the ID of the second device group corresponds to the Subgroup ID corresponding to the first node.

As one embodiment, the step S30 is after step S11 in Embodiment 5.

As one embodiment, the step S40 is after step S21 in Embodiment 5.


**Embodiment 7**

Embodiment 7 illustrates a flowchart of a first information block, as shown in FIG. 7. In FIG. 7, a first node U5 communicates with a second node N6 via a radio link. It should be particularly noted that the order in this embodiment does not limit the signal transmission order and implementation order in the present application. In the case of no conflict, embodiments, sub-embodiments and subsidiary embodiments in Embodiment 7 can be applied to Embodiment 5, 6, or 8; conversely, in the case of no conflict, any embodiment, sub-embodiment and subsidiary embodiment in Embodiment 5, 6, or 8 can be applied to Embodiment 7.

For **the first node U5,** in step S50, a first information block is received.

For **the second node N6,** in step S60, a first information block is sent.

In Embodiment 7, the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

As one embodiment, the first information block is transmitted via an air interface or a wireless interface.

As one embodiment, the first information block comprises all or part of one high-layer signaling or one physical layer signaling.

As one embodiment, the first information block comprises all or part of one RRC (Radio Resource Control) layer signaling, or the first information block comprises all or part of one MAC (Medium Access Control) layer signaling.

As one embodiment, the first information block comprises all or part of one system information block (SIB).

As one embodiment, the first information block comprises all or part of one SIB1.

As one embodiment, the first information block is user equipment-specific (UE-specific), or the first information block is cell-specific.

As one embodiment, the first information block is configured per carrier, or the first information block is configured per BWP (Bandwidth Part), or the first information block is configured per band or per frequency range (FR).

As one embodiment, the first information block comprises all or part of fields in a DCI (Downlink Control Information) format.

As one embodiment, the first information block comprises all or part of IE (Information Element) "PCCH-Config".

As one embodiment, the first information block comprises all or part of IE "DownlinkConfigCommonSIB".

As one embodiment, the first information block comprises all or part of IE "WUS-Config-r19".

As one embodiment, the first information block comprises all or part of IE "LPWUS-Config-r19".

As one embodiment, the first information block comprises all or part of IE "WUS-Config".

As one embodiment, the first information block comprises all or part of IE "LPWUS-Config".

As one embodiment, the name of the RRC signaling carrying the first information block comprises PCCH.

As one embodiment, the name of the RRC signaling carrying the first information block comprises Common.

As one embodiment, the name of the RRC signaling carrying the first information block comprises WUS.

As one embodiment, the name of the RRC signaling carrying the first information block comprises LP.

As one embodiment, the name of the RRC signaling carrying the first information block comprises Config.

As one embodiment, the first information block comprises all or part of paging configuration information.

As one embodiment, the first information block comprises all or part of downlink common configuration information.

As one embodiment, the first information block comprises all or part of wake-up signal configuration information.

As one embodiment, the technical feature "the first information block is used for determining X1 configuration sets" comprises the following meaning: the first information block is used by the first node device in the present application for determining the X1 configuration sets.

As one embodiment, the technical feature "the first information block is used for determining X1 configuration sets" comprises the following meaning: all or part comprised in the first information block are/is used for explicitly or implicitly indicating the X1 configuration sets.

As one embodiment, the technical feature "the first information block is used for determining X1 configuration sets" comprises the following meaning: all or part comprised in the first information block are/is used for explicitly or implicitly indicating one of the X1 configuration sets.

As one embodiment, the technical feature "the first information block is used for determining X1 configuration sets" comprises the following meaning: all or part comprised in the first information block are/is used for explicitly or implicitly indicating part of the X1 configuration sets, and at least one of the X1 configuration sets is a default configuration set.

As one embodiment, the technical feature "the first information block is used for determining X1 configuration sets" comprises the following meaning: the X1 configuration sets belong to one configuration set list, the first information block is used for adding a configuration set to the configuration set list, or the first information block is used for releasing the configuration set from the configuration set list.

As one embodiment, the technical feature "the first information block is used for determining X1 configuration sets" comprises the following meaning: the first information block is used for adding a configuration set to a configuration set list to which the X1 configuration sets belong, or the first information block is used for releasing the configuration set from the configuration set list to which the X1 configuration sets belong.

As one embodiment, X1 is equal to 2.

As one embodiment, X1 is greater than 2.

As one embodiment, the upper limit value of X1 is fixed.

As one embodiment, any one of the X1 configuration sets comprises only one configuration parameter value.

As one embodiment, any one of the X1 configuration sets comprises a plurality of configuration parameter values.

As one embodiment, any one of the X1 configuration sets is a value (or state) of one IE (Information Element).

As one embodiment, any one of the X1 configuration sets is a combination of values of a plurality of fields.

As one embodiment, any one of the X1 configuration sets is a combination of values of at least one field.

As one embodiment, any one of the X1 configuration sets is a value (or state) of one wake-up signal configuration IE.

As one embodiment, any one of the X1 configuration sets is composed of values of all fields comprised in one IE.

As one embodiment, any one configuration parameter value comprised in any one of the X1 configuration sets is a value of one field.

As one embodiment, the X1 configuration sets constitute one wake-up signal configuration list.

As one embodiment, any one of the X1 configuration sets is an element comprised in one list.

As one embodiment, any two of the X1 configuration sets are two configurations of the same IE.

As one embodiment, any two of the X1 configuration sets are respectively composed of values of fields from two separate configurations of the same IE.

As one embodiment, any two of the X1 configuration sets are separate values (states) of two identical IEs.

As one embodiment, any two of the X1 configuration sets are separate configurations of two identical IEs.

As one embodiment, any two of the X1 configuration sets are respectively composed of values of fields from separate configurations of two identical IEs.

As one embodiment, any two of the X1 configuration sets are respectively composed of values of fields of two configurations of the same IE.

As one embodiment, any two of the X1 configuration sets respectively comprise values of fields of two configurations of the same IE.

As one embodiment, any two of the X1 configuration sets are respectively composed of values from two separate configurations of combinations of the same fields.

As one embodiment, configuration parameter values respectively comprised in any two of the X1 configuration sets are independently configured.

As one embodiment, any one of the X1 configuration sets is composed of values of fields comprised in one wake-up signal configuration comprised in one wake-up signal configuration list.

As one embodiment, there exist two of the X1 configuration sets that are respectively values (or states) of two different IEs.

As one embodiment, there exist two of the X1 configuration sets that are respectively separate configurations of two different IEs.

As one embodiment, there exist two of the X1 configuration sets that respectively comprise separate values of different fields.

As one embodiment, at least one of the X1 configuration sets comprises values of fields used for configuring frequency domain resources of a wake-up signal.

As one embodiment, at least one of the X1 configuration sets comprises values of fields used for configuring time domain resources of a wake-up signal.

As one embodiment, at least one of the X1 configuration sets comprises values of fields used for configuring sequence resources used by a wake-up signal.

As one embodiment, at least one of the X1 configuration sets comprises values of fields used for configuring the number of information bits carried by a wake-up signal.

As one embodiment, at least one of the X1 configuration sets comprises values of fields used for configuring a format used by a wake-up signal.

As one embodiment, at least one of the X1 configuration sets comprises a value of a field used for configuring whether a wake-up signal is used for indicating the monitoring of PEI (Paging Early Indication).

As one embodiment, at least one of the X1 configuration sets comprises a value of a field used for configuring whether a wake-up signal is used for indicating the monitoring of a PDCCH of a PS-RNTI scrambled CRC.

As one embodiment, at least one of the X1 configuration sets comprises values of fields used for configuring a method for generating a wake-up signal.

As one embodiment, at least one of the X1 configuration sets comprises values of fields used for configuring a type of a wake-up signal.

As one embodiment, at least one of the X1 configuration sets comprises a value of a field of a modulation mode (OOK or FSK) used for configuring a wake-up signal.

As one embodiment, the user equipment comprised in the first device group is determined according to whether the user equipment has a subgroup ID assigned by the core network and whether the user equipment supports the core network to assign the subgroup.

As one embodiment, the user equipment comprised in the first device group is determined according to whether the user equipment has an index or identifier of at least one of the X1 configuration sets assigned by the core network and whether the user equipment supports the core network to assign the index or identifier of at least one of the X1 configuration sets.

As one embodiment, all pieces of user equipment comprised in the first device group support the core network to assign the subgroup.

As one embodiment, all pieces of user equipment comprised in the first device group support the core network to assign an index or identifier of at least one of the X1 configuration set.

As one embodiment, all pieces of user equipment comprised in the first device group support the core network to assign the subgroup and the subgroup ID assigned by the core network of all pieces of user equipment is equal to the same predefined value.

As one embodiment, all pieces of user equipment comprised in the first device group support the core network to assign an index or identifier of the target configuration set in the X1 configuration sets, and the index or identifier of the target configuration set assigned by the core network of all pieces of user equipment in the X1 configuration sets is equal to one predefined value.

As one embodiment, all pieces of user equipment comprised in the first device group support the core network to assign the subgroups, and the subgroup IDs allocated by the core network of all pieces of user equipment belong to the same predefined value range.

As one embodiment, all pieces of user equipment comprised in the first device group support the core network to assign an index or identifier of the target configuration set in the X1 configuration sets, and the index or identifier of the target configuration set assigned by the core network of all pieces of user equipment in the X1 configuration sets belongs to one predefined value range.

As one embodiment, all pieces of user equipment comprised in the first device group do not support the core network to assign indexes or identifiers of any one of the X1 configuration sets.

As one embodiment, all pieces of user equipment comprised in the first device group do not support the core network to assign the subgroups or support the core network to assign the subgroups but the subgroup IDs assigned by the core network are equal to the same predefined value.

As one embodiment, all pieces of user equipment comprised in the first device group do not support the core network to assign indexes or identifiers of any one of the X1 configuration sets or support the core network to assign the indexes or identifiers of at least one of the X1 configuration sets but the indexes or identifiers of the configuration set assigned by the core network are equal to the same predefined value.

As one embodiment, all pieces of user equipment comprised in the first device group do not support the core network to assign subgroups or support the core network to assign the subgroups but the subgroup IDs assigned by the core network belong to the same predefined value range.

As one embodiment, all pieces of user equipment comprised in the first device group do not support the core network to assign indexes or identifiers of any one of the X1 configuration sets, or support the core network to assign indexes or identifiers of at least one of the X1 configuration sets but the indexes or identifiers of the configuration sets assigned by the core network belong to the same predefined value range.

As one embodiment, the identifier of the first device group is an identifier or index of the target configuration set in the X1 configuration sets.

As one embodiment, the feature identification value is equal to the identification or index value of the target configuration set in the X1 configuration sets, each piece of user equipment comprised in the first device group is assigned the feature identification value, and the identifier of the first device group is equal to the feature identification value.

Typically, the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

As one embodiment, the first configuration set comprises one or more configuration parameter values of the frequency domain resources occupied by the target wake-up signal.

As one embodiment, the first configuration set comprises one or more configuration parameter values of the number of information bits comprised in the first information block.

As one embodiment, the first configuration set comprises one or more configuration parameter values of the sequence for generating the target wake-up signal.

As one embodiment, the first configuration set comprises one or more configuration parameter values of the number of time domain resources occupied by the target wake-up signal.

As one embodiment, the first configuration set comprises only one of the following four configuration parameter values: a configuration parameter value of frequency domain resources occupied by the target wake-up signal, a configuration parameter value of the number of information bits comprised in the first information block, a configuration parameter value for generating a sequence of the target wake-up signal, and a configuration parameter value of the number of time domain resources occupied by the target wake-up signal.

As one embodiment, the first configuration set comprises at least one or any combinations of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

As one embodiment, the first configuration set comprises any combinations of the following four configuration parameter values: a configuration parameter value of frequency domain resources occupied by the target wake-up signal, a configuration parameter value of the number of information bits comprised in the first information block, a configuration parameter value for generating a sequence of the target wake-up signal, and a configuration parameter value of the number of time domain resources occupied by the target wake-up signal.

As one embodiment, the first configuration set comprises any combinations of two or three of the following four configuration parameter values: a configuration parameter value of frequency domain resources occupied by the target wake-up signal, a configuration parameter value of the number of information bits comprised in the first information block, a configuration parameter value for generating a sequence of the target wake-up signal, and a configuration parameter value of the number of time domain resources occupied by the target wake-up signal.

As one embodiment, the first configuration set comprises all of the following four configuration parameter values: a configuration parameter value of frequency domain resources occupied by the target wake-up signal, a configuration parameter value of the number of information bits comprised in the first information block, a configuration parameter value for generating a sequence of the target wake-up signal, and a configuration parameter value of the number of time domain resources occupied by the target wake-up signal.

As one embodiment, the frequency domain resources occupied by the target wake-up signal comprise protection frequency domain resources or frequency domain resources of a protection band.

As one embodiment, the frequency domain resources occupied by the target wake-up signal do not comprise protection frequency domain resources or frequency domain resources of a protection band.

As one embodiment, at least one configuration parameter value of the frequency domain resources occupied by the target wake-up signal comprises the subcarrier spacing of the subcarriers occupied by the target wake-up signal in the frequency domain.

As one embodiment, at least one configuration parameter value of the frequency domain resources occupied by the target wake-up signal comprises the number of RBs or the number of subcarriers occupied by the target wake-up signal in the frequency domain.

As one embodiment, at least one configuration parameter value of the frequency domain resources occupied by the target wake-up signal comprises the bandwidth of the target wake-up signal in the frequency domain.

As one embodiment, at least one configuration parameter value of the frequency domain resources occupied by the target wake-up signal comprises the position of the frequency domain resources occupied by the target wake-up signal in the frequency domain.

As one embodiment, at least one configuration parameter value of the frequency domain resources occupied by the target wake-up signal comprises the number of RBs or the number of subcarriers occupied by the target wake-up signal in the frequency domain and the position of the frequency domain resources occupied by the target wake-up signal in the frequency domain.

As one embodiment, at least one configuration parameter value of the frequency domain resources occupied by the target wake-up signal comprises the position of one frequency point in the frequency domain resources occupied by the target wake-up signal in the frequency domain.

As one embodiment, at least one configuration parameter value of the frequency domain resources occupied by the target wake-up signal comprises the number of frequency domain protection resources configured for the target wake-up signal in the frequency domain.

As one embodiment, at least one configuration parameter value of the number of information bits comprised in the first information block comprises the number of bits comprised in at least one field in the first information block.

As one embodiment, at least one configuration parameter value of the number of information bits comprised in the first information block comprises a range indication of the number of bits comprised in the first information block.

As one embodiment, at least one configuration parameter value of the number of information bits comprised in the first information block comprises the number of device groups used in the first information block, and the number of information bits comprised in the first information block is related to the number of device groups used in the first information block.

As one embodiment, at least one configuration parameter value of the number of information bits comprised in the first information block comprises the number of load bits comprised in the first information block.

As one embodiment, at least one configuration parameter value of the number of information bits comprised in the first information block comprises the total number of information bits comprised in the first information block.

As one embodiment, at least one configuration parameter value of the number of information bits comprised in the first information block comprises the number of information bits for a specific purpose comprised in the first information block.

As one embodiment, the first configuration set comprises at least one configuration parameter value of whether the first information block comprises a CRC bit.

As one embodiment, the first configuration set comprises at least one configuration parameter value of the number of CRC bits comprised in the first information block.

As one embodiment, at least one configuration parameter value for generating the sequence of the target wake-up signal comprises the sequence length for generating the target wake-up signal.

As one embodiment, at least one configuration parameter value for generating the sequence of the target wake-up signal comprises the sequence type for generating the target wake-up signal.

As one embodiment, at least one configuration parameter value for generating the sequence of the target wake-up signal comprises the value of the root of the sequence for generating the target wake-up signal.

As one embodiment, at least one configuration parameter value for generating the sequence of the target wake-up signal comprises a candidate value set for cyclic shift of the sequence for generating the target wake-up signal.

As one embodiment, at least one configuration parameter value for generating the sequence of the target wake-up signal comprises an initialization value for generating the sequence of the target wake-up signal.

As one embodiment, at least one configuration parameter value for generating the sequence of the target wake-up signal comprises a group hopping value for generating the sequence of the target wake-up signal.

As one embodiment, at least one configuration parameter value for generating the sequence of the target wake-up signal comprises a sequence hopping value for generating the sequence of the target wake-up signal.

As one embodiment, at least one configuration parameter value for generating the sequence of the target wake-up signal comprises an oversampling value for generating the sequence of the target wake-up signal.

As one embodiment, at least one configuration parameter value for generating the sequence of the target wake-up signal comprises a point value of a DFT (or FFT or IDFT or IFFT) for generating the sequence of the target wake-up signal.

As one embodiment, at least one configuration parameter value of the number of time domain resources occupied by the target wake-up signal comprises a length of a cyclic prefix (CP) occupied by the target wake-up signal in the time domain.

As one embodiment, at least one configuration parameter value of the number of time domain resources occupied by the target wake-up signal comprises the number of OFDM symbols occupied by the target wake-up signal in the time domain.

As one embodiment, at least one configuration parameter value of the number of time domain resources occupied by the target wake-up signal comprises the number of time slots occupied by the target wake-up signal in the time domain.

As one embodiment, at least one configuration parameter value of the number of time domain resources occupied by the target wake-up signal comprises the number of repetitions of the target wake-up signal in the time domain.

As one embodiment, at least one configuration parameter value of the number of time domain resources occupied by the target wake-up signal comprises the number of occupied by the target wake-up signal in the time domain, wherein $T_c = 1/(480 \cdot 10^3 \cdot 4096)$ seconds.

As one embodiment, at least one configuration parameter value of the number of time domain resources occupied by the target wake-up signal comprises the number of SS/PBCH (Synchronization Signal/Physical Broadcast Channel) blocks associated with the target wake-up signal in the time domain, and the number of time domain resources occupied by the target wake-up signal is related to the number of SS/PBCH blocks associated with the target wake-up signal in the time domain.

As one embodiment, at least one configuration parameter value of the number of time domain resources occupied by the target wake-up signal comprises the number of POs associated with the target wake-up signal, and the number of time domain resources occupied by the target wake-up signal is related to the number of POs associated with the target wake-up signal.

As one embodiment, the step S50 is before step S10 in Embodiment 5.

As one embodiment, the step S60 is before step S20 in Embodiment 5.

As one embodiment, the step S50 is after step S10 and before step S11 in Embodiment 5.

As one embodiment, the step S60 is after step S20 and before step S21 in Embodiment 5.

## Embodiment 8

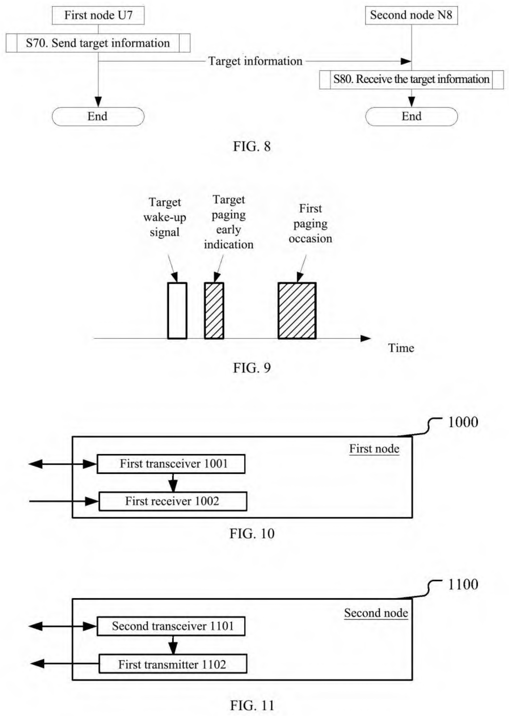

Embodiment 8 illustrates a flowchart of target information, as shown in FIG. 8. In FIG. 8, a first node U7 communicates with a second node N8 via a radio link. It should be particularly noted that the order in this embodiment does not limit the signal transmission order and implementation order in the present application. In the case of no conflict, embodiments, sub-embodiments and subsidiary embodiments in Embodiment 8 can be applied to Embodiment 5, 6, or 7; conversely, in the case of no conflict, any embodiment, sub-embodiment and subsidiary embodiment in Embodiment 5, 6, or 7 can be applied to Embodiment 8.

For **the first node U7,** in step S70, target information is sent.

For **the second node N8,** in step S80, target information is received.

In Embodiment 8, the target information is used for determining that the first node supports the target wake-up signal and the target paging early indication simultaneously.

As one embodiment, the target information is used for indicating a capability of the first node device.

As one embodiment, the target information is transmitted via an air interface or a wireless interface.

As one embodiment, the target information is also transmitted via an X2 interface, an Xn interface or an NG interface.

As one embodiment, the target information is also transmitted between network nodes.

As one embodiment, after being received by the network node via an RAN interface, the target information is also transmitted to another network node or to the core network.

As one embodiment, after being received by the network node via a Uu interface, the target information is also transmitted to another network node or to the core network.

As one embodiment, the target information comprises all or part of a high-layer signaling or a physical layer signaling.

As one embodiment, the target information is earlier than the target information block.

As one embodiment, the target information is later than the target information block.

As one embodiment, the target information is earlier than the target wake-up signal.

As one embodiment, the target information is later than the target wake-up signal.

As one embodiment, the target information comprises all or part of an RRC signaling, or the target information comprises all or part of an MAC layer signaling.

As one embodiment, the target information is transmitted via a PUSCH or a PUCCH (Physical Uplink Control Channel).

As one embodiment, the target information is per UE, or the target information is per feature set, or the target information is per band, or the target information is per band combination, or the target information is per band list, or the target information is per frequency range, or the target information is per duplex mode.

As one embodiment, the target information is related to a frequency range.

As one embodiment, the target information is related to a duplex mode (TDD or FDD).

As one embodiment, the target information comprises all or part of a UE-NR-Capability IE.

As one embodiment, the target information comprises all or part of "UE-RadioPagingInfo".

As one embodiment, the target information comprises all or part of "UERadioPagingInformation".

As one embodiment, the target information comprises all or part of "UE-NR-Capability-v1900".

As one embodiment, the target information comprises all or part of "LPWUS-Parameters-v1900".

As one embodiment, the target information comprises all or part of "lpwus-SubgroupingSupportBandList-r19".

As one embodiment, the target information is used for indicating the UE capability required for paging.

As one embodiment, the number of bands indicated by the target information is not greater than 1024.

As one embodiment, the target information is also used for indicating parameter values of the receiver supported by the first node device.

As one embodiment, the target information is also used for indicating the type of the receiver supported by the first node device.

As one embodiment, the target information block is used for indicating receiving parameter values of the wake-up signal supported by the first node device.

As one embodiment, the target information is also used to indicate at least one configuration parameter value of the wake-up signal supported by the first node device.

As one embodiment, the step S70 is before step S10 in Embodiment 5.

As one embodiment, the step S80 is before step S20 in Embodiment 5.

### Embodiment 9

Embodiment 9 illustrates one schematic diagram of a target wake-up signal and a target paging early indication, as shown in FIG. 9. In FIG. 9, the target wake-up signal is before the target paging early indication, and the first paging occasion shown in the figure is after the target paging early indication.

As one embodiment, when the first device group and the second device group are the same or the first device group is a subset of the second device group, the first node is not required to monitor the target paging early indication; otherwise, the first node monitors the target paging early indication.

As one sub-embodiment of this embodiment, when the target wake-up signal wakes up the first node, the first node monitors the first signaling in the first paging occasion.

As one sub-embodiment of this embodiment, when the target wake-up signal does not wake up the first node, the first node abandons monitoring the first signaling in the first paging occasion.

As one embodiment, when the target wake-up signal and the target paging early indication are used together for waking up the first node, the first node monitors the first signaling in the first paging occasion.

As one embodiment, when one of the target wake-up signal and the target paging early indication is used for waking up the first node, the first node abandons monitoring the first signaling in the first paging occasion.

As one embodiment, when neither the target wake-up signal nor the target paging early indication is used for waking up the first node, the first node abandons monitoring the first signaling in the first paging occasion.

### Embodiment 10

Embodiment 10 illustrates one structural block diagram in a first node, as shown in FIG. 10. In FIG. 10, the first node 1000 comprises a first transceiver 1001 and a first receiver 1002.

The first transceiver 1001 receives a target information block and receives a target wake-up signal, the target wake-up signal being used for determining a first device group, the first device group comprising at least one device, and the first node being one device comprised in the first device group; and

a first receiver 1002 determines whether to monitor a target paging early indication, the target paging early indication being associated with G1 device groups, and G1 being a positive integer greater than 1.

In Embodiment 10, the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

As one embodiment, the first node comprises:

the first receiver 1002, determining to monitor the target paging early indication.

As one embodiment, the first node comprises:

the first receiver 1002, receiving the target paging early indication.

As one embodiment, when the first device group and the second device group are the same or the first device group is a subset of the second device group, the first node is not required to monitor the target paging early indication; otherwise, the first node monitors the target paging early indication.

As one embodiment, the first node comprises:

the first receiver 1002, determining whether to monitor a first signaling in a first paging occasion, wherein the G1 device groups are all associated with the first paging occasion, and the target wake-up signal is associated with the first paging occasion; the target wake-up signal and the target paging early indication are used together for determining whether to monitor the first signaling in the first paging occasion; and an identifier of the first node is used for determining the first paging occasion.

As one embodiment, the first node comprises:
the first receiver 1002, determining to monitor a first signaling in a first paging occasion.

As one embodiment, the first node comprises:
the first receiver 1002, receiving a first signaling in a first paging occasion.

As one embodiment, the first node comprises:

the first receiver 1002, receiving a first information block,
wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

As one embodiment, the first node comprises:

the first transceiver 1001, sending target information,
wherein the target information is used for determining that the first node supports the target wake-up signal and the target paging early indication simultaneously.

As one embodiment, the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; and an identifier of the second device group is used for determining the target configuration set from the X2 configuration sets, and the target configuration set is used for determining time domain resources occupied by the target paging early indication.

As one embodiment, the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

As one embodiment, the first transceiver 1001 comprises at least the first six of an antenna 452, a transmitting device/receiving device 454, a multi-antenna transmitting processor 457, a multi-antenna receiving processor 458, a transmitting processor 468, a receiving processor 456, and a controller/processor 459 in Embodiment 4.

As one embodiment, the first receiver 1002 comprises at least the first four of an antenna 452, a receiving device 454, a multi-antenna receiving processor 458, a receiving processor 456, and a controller/processor 459 in Embodiment 4.

### Embodiment 11

Embodiment 11 illustrates one structural block diagram in a second node, as shown in FIG. 11. In FIG. 11, the second node 1100 comprises a second transceiver 1101 and a first transmitter 1102.

The second transceiver 1101 sends a target information block and sends a target wake-up signal, the target wake-up signal being used for determining a first device group, the first device group comprising at least one device, and a first node being one device comprised in the first device group; and
the first transmitter 1102 sends a target paging early indication, the target paging early indication being associated with G1 device groups, and G1 being a positive integer greater than 1,

In Embodiment 11, a recipient of the target information block comprises the first node; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication. As one embodiment, the first DCI is used for determining a first RE set, wherein the first RE set is related to a second RE set, and the first channel occupies the second RE set; and the resource mapping from the first channel to the second RE set is independent of the target signaling.

As one embodiment, when the first device group and the second device group are the same or the first device group is a subset of the second device group, the first node is not required to monitor the target paging early indication; otherwise, the first node monitors the target paging early indication.

As one embodiment, the second node comprises:

a first transmitter 1102, determining whether to send a first signaling in a first paging occasion,

wherein the G1 device groups are all associated with the first paging occasion, and the target wake-up signal is associated with the first paging occasion; the target wake-up signal and the target paging early indication are used together for determining whether to send the first signaling in the first paging occasion; and an identifier of the first node is used for determining the first paging occasion.

As one embodiment, the second node comprises:
the first transmitter 1102, determining to send a first signaling in a first paging occasion.
As one embodiment, the second node comprises:
the first transmitter 1102, sending a first signaling in a first paging occasion.
As one embodiment, the second node comprises:

the first transmitter 1102, sending a first information block,
wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

As one embodiment, the second node comprises:

the second transceiver 1101, receiving target information,
wherein the target information is used for determining that the first node supports the target wake-up signal and the target paging early indication simultaneously.

As one embodiment, the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; and an identifier of the second device group is used for determining the target configuration set from the X2 configuration sets, and the target configuration set is used for determining time domain resources occupied by the target paging early indication.
As one embodiment, the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.
As one embodiment, the second transceiver 1101 comprises at least the first six of an antenna 420, a receiving device/transmitting device 418, a multi-antenna receiving processor 472, a receiving processor 470, a multi-antenna transmitting processor 471, a transmitting processor 414, and a controller/processor 475 in Embodiment 4.
As one embodiment, the first transmitter 1102 comprises at least the first four of the antenna 420, a transmitting device 418, a multi-antenna transmitting processor 471, a transmitting processor 414, and the controller/processor 475 in Embodiment 4.
Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The first node in the present application includes, but is not limited to, mobile phones, tablet computers, laptops, network cards, low-power devices, eMTC devices, NB-IoT devices, vehicle-mounted communication devices, transportation tools, vehicles, RSUs (Road Side Units), aircrafts, airplanes, drones, remote-controlled airplanes and other wireless communication devices. The second node in the present application includes, but is not limited to, macrocellular base stations, microcellular base stations, small cell base stations, Femtocells, relay base stations, eNBs, gNBs, transmitter receiver points (TRPs), GNSSs (Global Navigation Satellite Systems), relay satellites, satellite base stations, air base stations, RSUs, drones, test devices, transceiving apparatuses or signaling testers that simulate some functions of base stations, and other wireless communication devices.
Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

**Claims**

1. A first node for wireless communication, comprising:

   a first transceiver, receiving a target information block and receiving a target wake-up signal, the target wake-up signal being used for determining a first device group, the first device group comprising at least one device, and the first node being one device comprised in the first device group; and
   a first receiver, determining whether to monitor a target paging early indication, the target paging early indication being associated with G1 device groups, and G1 being a positive integer greater than 1,
   wherein the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

2. The first node according to claim 1, wherein when the first device group and the second device group are the same or the first device group is a subset of the second device group, the first node is not required to monitor the target paging early indication; otherwise, the first node monitors the target paging early indication.

3. The first node according to claim 1 or 2, comprising:

   the first receiver, determining whether to monitor a first signaling in a first paging occasion,
   wherein the G1 device groups are all associated with the first paging occasion, and the target wake-up signal is associated with the first paging occasion; the target wake-up signal and the target paging early indication are used together for determining whether to monitor the first signaling in the first paging occasion; and an identifier of the first node is used for determining the first paging occasion.

4. The first node according to any one of claims 1 to 3, comprising:

   the first receiver, receiving a first information block,
   wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

5. The first node according to any one of claims 1 to 4, comprising:

   the first transceiver, sending target information,
   wherein the target information is used for determining that the first node supports the target wake-up signal and the target paging early indication simultaneously.

6. The first node according to any one of claims 1 to 5, wherein the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; and an identifier of the second device group is used for determining the target configuration set from the X2 configuration sets, and the target configuration set is used for determining time domain resources occupied by the target paging early indication.

7. The first node device according to any one of claims 4 to 6, wherein the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

8. A second node for wireless communication, comprising:

a second transceiver, sending a target information block and sending a target wake-up signal, the target wake-up signal being used for determining a first device group, the first device group comprising at least one device, and a first node being one device comprised in the first device group; and

a first transmitter, sending a target paging early indication, the target paging early indication being associated with G1 device groups, and G1 being a positive integer greater than 1,

wherein a recipient of the target information block comprises the first node; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

9.  The second node according to claim 8, wherein when the first device group and the second device group are the same or the first device group is a subset of the second device group, the first node is not required to monitor the target paging early indication; otherwise, the first node monitors the target paging early indication.

10. The second node according to claim 8 or 9, comprising: the first transmitter, determining whether to send a first signaling in a first paging occasion, wherein the G1 device groups are all associated with the first paging occasion, and the target wake-up signal is associated with the first paging occasion; the target wake-up signal and the target paging early indication are used together for determining whether to send the first signaling in the first paging occasion; and an identifier of the first node is used for determining the first paging occasion.

11. The second node according to any one of claims 8 to 10, comprising: the first transmitter, sending a first information block, wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

12. The second node according to any one of claims 8 to 11, comprising: the second transceiver, receiving target information, wherein the target information is used for determining that the first node supports the target wake-up signal and the target paging early indication simultaneously.

13. The second node according to any one of claims 8 to 12, wherein the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; and an identifier of the second device group is used for determining the target configuration set from the X2 configuration sets, and the target configuration set is used for determining time domain resources occupied by the target paging early indication.

14. The second node according to any one of claims 8 to 13, wherein the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

15. A method used in a first node for wireless communication, comprising:

receiving a target information block and receiving a target wake-up signal, the target wake-up signal being used for determining a first device group, the first device group comprising at least one device, and the first node being one device comprised in the first device group; and

determining whether to monitor a target paging early indication, the target paging early indication being associated with G1 device groups, and G1 being a positive integer greater than 1,

wherein the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

16. The method used in a first node according to claim 15, wherein when the first device group and the second device group are the same or the first device group is a subset of the second device group, the first node is not required to monitor the target paging early indication; otherwise, the first node monitors the target paging early indication.

17. The method used in a first node according to claim 15 or 16, comprising: determining whether to monitor a first signaling in a first paging occasion, wherein the G1 device groups are all associated with the first paging occasion, and the target wake-up signal is associated with the first paging occasion; the target wake-up signal and the target paging early indication are used together for determining whether to monitor the first signaling in the first paging occasion; and an identifier of the first node is used for determining the first paging occasion.

18. The method used in a first node according to any one of claims 15 to 17, comprising: receiving a first information block, wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

19. The method used in a first node according to any one of claims 15 to 18, comprising: sending target information, wherein the target information is used for determining that the first node supports the target wake-up signal and the target paging early indication simultaneously.

20. The method used in the first node according to any one of claims 15 to 19, wherein the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; and an identifier of the second device group is used for determining the target configuration set from the X2 configuration sets, and the target configuration set is used for determining time domain resources occupied by the target paging early indication.

21. The method used in a first node according to any one of claims 15 to 20, wherein the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

22. A method used in a second node for wireless communication, comprising:

sending a target information block and sending a target wake-up signal, the target wake-up signal being used for determining a first device group, the first device group comprising at least one device, and a first node being one device comprised in the first device group; and
sending a target paging early indication, the target paging early indication being associated with G1 device groups, and G1 being a positive integer greater than 1,
wherein a recipient of the target information block comprises the first node; the target information block is used for determining the G1 device groups, and any one of the G1 device groups comprises at least one device; and a second device group is one of the G1 device groups, the first node belongs to the second device group, and the relationship between the first device group and the second device group is used for determining whether to monitor the target paging early indication.

23. The method used in a second node according to claim 22, wherein when the first device group and the second device group are the same or the first device group is a subset of the second device group, the first node is not required to monitor the target paging early indication; otherwise, the first node monitors the target paging early indication.

24. The method used in a second node according to claim 22 or 23, comprising: determining whether to send a first signaling in a first paging occasion, wherein the G1 device groups are all associated with the first paging occasion, and the target wake-up signal is associated with the first paging occasion; the target wake-up signal and the target paging early indication are used together for determining whether to send the first signaling in the first paging occasion; and an identifier of the first node is used for determining the first paging occasion.

25. The method used in a second node according to any one of claims 22 to 24, comprising: sending a first information block, wherein the first information block is used for determining X1 configuration sets, any one of the X1 configuration sets comprises at least one configuration parameter value, and X1 is a positive integer greater than 1; a first configuration set is one of the X1 configuration sets, and the first configuration set comprises at least one configuration parameter value of the target wake-up signal; and an identifier of the first device group is used for determining the first configuration set from the X1 configuration sets.

26. The method used in a second node according to any one of claims 22 to 25, comprising: receiving target information, wherein the target information is used for determining that the first node supports the target wake-up signal and the target paging early indication simultaneously.

27. The method used in a second node according to any one of claims 22 to 26, wherein the target information block is used for determining X2 configuration sets, any one of the X2 configuration sets comprises at least one configuration parameter value, and X2 is a positive integer greater than 1; a target configuration set is one of the X2 configuration sets, and the target configuration set comprises a configuration of the target paging early indication; and an identifier of the second device group is used for determining the target configuration set from the X2 configuration sets, and the target configuration set is used for determining time domain resources occupied by the target paging early indication.

28. The method used in a second node according to any one of claims 22 to 27, wherein the first configuration set comprises at least one of the following four configuration parameter values: a configuration parameter value of frequency domain resources occupied by the target wake-up signal, a configuration parameter value of the number of information bits comprised in the target information block, a configuration parameter value for generating a sequence of the target wake-up signal, and a configuration parameter value of the number of time domain resources occupied by the target wake-up signal.

100 ⟶  ( First node )

Step 101 Receive a target information block and a target wake-up signal, the target wake-up signal being used for determining a first device group, the first device group at least comprising one device, and the first node being one device comprised in the first device group

Step 102 Determine whether to monitor a target paging early indicator, the target paging early indicator being associated with G1 device groups, and G1 being a positive integer greater than 1

( End )

FIG. 1

EPS 200

NR-RAN
202

UE 201

NR node B 203

Other NR nodes B 204

HSS 220

MME/AMF/UPF 211

Others MME/AMF/UPF 214

S-GW 212

P-GW 213

Internet service 230

5G-CN/EPC
210

FIG. 2

Control plane
300

L3 — RRC 306

L2 — PDCP 304

RLC 303

MAC 302

L1 — PHY 301

305

User plane
350

SDAP 356

PDCP 354

RLC 353

MAC 352

PHY 351

355 — L2

L1

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/CN2023/139437** |

| A. | CLASSIFICATION OF SUBJECT MATTER |
| --- | --- |

H04W68/02(2009.01)i; H04W52/02(2009.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, CNTXT, ENTXTC, 3GPP: 低功率, 唤醒信号, 寻呼提前指示, 第一, 第二, 终端, 设备, 组, 集合, 子组, 子集, 监测, low power, LP, wake up singal, WUS, paging early indicator, PEI, first, second, terminal, device, group, set, subgroup, subset, monitor

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111132280 A (VIVO COMMUNICATION TECHNOLOGY CO., LTD.) 08 May 2020 (2020-05-08)<br>entire document | 1-28 |
| A | CN 115348648 A (HUAWEI TECHNOLOGIES CO., LTD.) 15 November 2022 (2022-11-15)<br>entire document | 1-28 |
| A | CN 114828167 A (DATANG MOBILE COMMUNICATIONS EQUIPMENT CO., LTD.) 29 July 2022 (2022-07-29)<br>entire document | 1-28 |
| A | MEDIATEK INC. "UE-Group Paging Early Indication (R2-2101539)"<br>*3GPP tsg_ran\wg2_rl2*, No. tsgr2_113-e, 15 January 2021 (2021-01-15),<br>entire document | 1-28 |

☐ Further documents are listed in the continuation of Box C.    ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 March 2024** | **27 March 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| PCT/CN2023/139437 |

| Patent document cited in search report | | | Publication date (day/month/year) | Patent family member(s) | Publication date (day/month/year) |
|---|---|---|---|---|---|
| CN | 111132280 | A | 08 May 2020 | None | |
| CN | 115348648 | A | 15 November 2022 | None | |
| CN | 114828167 | A | 29 July 2022 | None | |

Form PCT/ISA/210 (patent family annex) (July 2022)